# EUROPEAN PATENT SPECIFICATION

(11) **EP 3 468 812 B1**
(45) Date of publication and mention of the grant of the patent: **23.11.2022**
(21) Application number: 17810637.3
(22) Date of filing: 26.05.2017
(51) Int. Cl.: B44D 3/12, A46B 17/04, B29C 45/14

(54) **CASING FOR PAINT TOOL**
GEHÄUSE FÜR MALERWERKZEUG
BOÎTIER POUR OUTIL DE PEINTURE

(30) Priority: 09.06.2016 SE 1650810
(43) Date of publication of application: 17.04.2019
(73) Proprietor: Orkla House Care AB, 564 23 Bankeryd (SE)
(72) Inventor: FRANZÉN, Tobias, 562 31 Norrahammar (SE); SANDSTRÖM, Peter, 564 32 Bankeryd (SE)
(74) Representative: AWA Sweden AB
(86) International application number: PCT/SE2017/050565
(87) International publication number: WO 2017/213574

(56) References cited:
- WO-A1-89/11237
- CA-A1- 2 127 670
- US-A- 4 802 576
- US-A- 5 966 902
- US-A1- 2003 188 980
- US-A1- 2014 014 542
- US-A1- 2015 250 298
- US-B1- 7 987 980

## Description

### TECHNICAL FIELD

The present invention relates to casings for temporary storage of paint tainted/wet paint tools after a first painting is finished but before a second painting is to be performed.

### BACKGROUND ART

Regarding prior art paint tools, a painter that is going to use the tool more than once is aware of the fact that if the paint tool is stored after a first use, the paint tool has to be pliable and workable after storage for enabling subsequent use. In order to achieve this, prior art paint tools normally have to be cleaned, i.e. as much as possible of the paint remaining from the first painting has to be removed from the paint tool before storing it, such that remaining paint does not harden on the paint tool, and the paint tool does not get a shortened life time, especially if the paint tool is an expensive one.

The cleaning of prior art paint tools may be done in different ways before storage after a first paint job is finished. One way is to wash the prior art paint tool by means of turpentine or paint thinner, or soap water (only usable for water based paints). These ways of cleaning a prior art paint tool are cumbersome, messy and time consuming.

Another way of keeping a prior art paint tool pliable and usable after a first paint job is to put the paint tainted paint tool in a receptacle for storage until another paint job is to be done. This storage may be done using an open receptacle, e.g. a glass or metal jar, filled with a paint thinning solution or an openable and closable receptacle similar to a hardshell spectacle case or a small hardshell suitcase. The paint tainted paint tool is put into the closable receptacle after a first paint job and the receptacle is closed around the paint tool, at least around the part of the paint tool that is used for painting, e.g. the brush head of a paint brush or the whole roller of a paint-applying roller. The part of the paint tool held during painting is thereafter commonly exposed to the surroundings outside the receptacle.

US4802576 A discloses a storage container for a paint roller including a paint applying roll and a handle, the container surrounding the roller on all sides and having a housing provided with a recess for the paint roller, wherein a further recess for a roll of foil is provided next to the paint-applying roll within or outside of the container.

### SUMMARY OF THE INVENTION

It is an object of the present invention is to provide an openable and closable casing for a paint tainted/wet paint tool, which achieves easy access to and easy handled temporary storage of the paint tool. Another object of the present invention is to provide an openable and closable casing for a paint tainted/wet paint tool, which creates an airtight temporary storage of the paint tool after painting and easy access to it before continued painting. A further object of the present invention is to provide an openable and closable casing for a paint tainted/wet paint tool, which creates a robust temporary storage of the wet paint tool after painting and after closure of the casing around at least a part of the paint tainted paint tool. Still a further object of the present invention is to provide an openable and closable casing for a paint tainted/wet paint tool, which further increases the time of temporary storage for paint tainted/wet paint tools until any remaining paint on the paint tool inside the closed casing has hardened to such an extent that the paint tool has a diminished or even ruined painting performance when removing the paint tool from the casing up to at least three days and nights, i.e. 72 hours after putting a paint tainted/wet paint tool inside the casing and closing the casing shut. Yet another object of the invention is to provide an openable and closable casing for a paint tainted/wet paint tool, which casing comprises two halves connected by a living hinge, which further increases the stiffness and robustness of the whole casing and its airtight sealing effect by moulding the sealing and casing halves in two different plastic materials that together synergetically improve the former material properties. One other object of the invention is to provide an openable and closable casing for a paint tainted/wet paint tool, which casing comprises two halves connected by a living hinge, which further increases the stiffness and robustness of the whole casing and its airtight sealing effect by moulding the sealing and casing halves in two different plastic materials that together synergetically improve the airtight engagement/abutment of the sealing and the casing halves when the casing is closed by means of facilitating the torsional rigidity of these entities while at the same time making the sealing elastic/flexible/soft enough such that any load on the casing when closed is distributed uniformly without leakage of air into the casing. A further object of the invention is to provide an openable and closable casing for a paint tainted/wet paint tool, which casing comprises two halves connected by a living hinge, which further increases the stiffness and robustness of the whole casing and its airtight sealing effect by moulding the sealing and casing halves in two different plastic materials that together synergetically improve the airtight engagement/abutment of the sealing and the casing halves when the casing is closed by means of facilitating the flexural rigidity of these entities while at the same time making the sealing elastic/flexible/soft enough such that any load on the casing when closed is distributed uniformly without leakage of air into the casing. Another object of the invention is to provide an openable and closable casing for a paint tainted/wet paint tool, which casing comprises two halves connected by a living hinge, the casing being air-proof due to a sealing that is made in another material than the casing halves and the sealing is a gasket moulded in one piece with at least one of the casing halves, whereby the air-proof casing comprises casing halves and a sealing made of different but air impenetrable materials, which materials are chosen to give an improved air-tightness due to a synergy effect facilitating both the stiffness of the whole casing, such that loads on the casing do not twist or bend it such that air leakage occurs, and the air-proof mating between the casing halves when the casing is closed due to the material properties of the sealing and the joining of the sealing to the casing halves, which joint is seamless/integral with the associated casing half and therefore airtight due to the one piece moulding.

These objects are achieved by means of a casing for a paint tainted/wet paint tool as claimed in the associated independent claim, preferred variants thereof being defined in the associated dependent claims.

The above and further objects are achieved by providing a casing for a paint tainted/wet paint tool. The inventive casing is intended for temporarily storing a wet paint tool, the casing comprising two halves connected by a living hinge, each casing half comprising a mating surface adapted to interact with a mating surface of the other casing half, wherein the casing is adapted to be closed to enclose a paint holding member of the paint tool while exposing a part of a grip member of the paint tool and to be opened to enable access to the paint tool, and at least one sealing adapted to enclose at least a part of the paint holding member of the paint tool, and wherein the at least one sealing covers at least a part of the mating surface of at least one casing half, and the sealing is a gasket moulded in one piece with at least one of the casing halves and moulded in a plastic material that is different from the material of the casing halves.

Further objects and features of the present invention will appear from the following definitions of aspects/examples of the invention.

According to one aspect of the disclosure, it provides a casing, wherein the sealing is moulded in one piece with each of the casing halves.

According to the invention, it provides a casing, wherein each of the casing halves comprises a recess configured to receive and surround at least a part of the paint tool, whereby the sealing is moulded in one piece with the recess of at least one of the casing halves.

According to another aspect of the disclosure, it provides a casing, wherein the sealing is moulded in one piece with the recess of each of the casing halves.

According to yet another aspect of the disclosure, it provides a casing, wherein the recess of each casing half comprises an orifice configured to receive and surround at least a part of the paint tool, whereby the sealing is moulded in one piece with the orifice of said recess of at least one of the casing halves.

According to a still further aspect of the disclosure, it provides a casing, wherein the sealing is moulded in one piece with the orifice of the recess of each of the casing halves.

According to one further aspect of the disclosure, it provides a casing, wherein the sealing is at least partly configured as a labyrinth seal.

According to yet one further aspect of the disclosure, it provides a casing, wherein the sealing is accomplished by at least one lamella formed on the inside of at least one casing half. According to still one further aspect of the disclosure, it provides a casing, wherein the at least one lamella is formed on the inside of each casing half.

According to yet another aspect of the disclosure, it provides a casing, wherein the at least one lamella protrudes away from one casing half inwards when the casing is closed. According to still another aspect of the disclosure, it provides a casing, wherein the at least one lamella is configured to fit tightly around at least a part of the paint tool when the casing is closed.

According to one more aspect of the disclosure, it provides a casing, wherein the at least one lamella on one casing half is configured to fit tightly around at least a part of the paint tool and at least one lamella on the other casing half is configured to fit tightly around at least the remaining of substantially the same part of the paint tool when the casing is closed.

According to yet one aspect of the disclosure, it provides a casing, wherein the sealing is configured as an integrally moulded inner lining of a part of at least one casing half.

According to yet one more aspect of the disclosure, it provides a casing, wherein the sealing is configured as an integrally moulded inner lining of a part of each of the casing halves.

According to still one more aspect of the disclosure, it provides a casing, wherein one case half comprises an/a indentation/notch at one end configured to form an end opening of the casing together with an/a complementary indentation/notch of the other case half when the case is closed through which end opening the grip member of the paint tool at least partly extends out of.

The disclosure according to one further aspect provides a casing, wherein the sealing is made in another plastic material than the casing halves, which plastic materials of the sealing and the casing halves are a combination of any of the following plastic materials, such as polypropylene; thermoplastic elastomer; polyamide; polycarbonate; acrylonitrile butadiene styrene; silicone; polycarbonate and acrylonitrile butadiene styrene and thermoplastic elastomer; polypropylene and polypropylene; and/or polypropylene and silicone.

The disclosure according to another aspect provides a casing, wherein the sealing is configured as a fenestrated structure comprising a first part of a continuous inner lining covering at least a part of the whole inner surface of the recess and the orifice of at least one casing half, which part is adapted to receive at least a part of the grip member of the paint tool.

The disclosure according to yet another aspect provides a casing, wherein the sealing comprises a second part of the continuous inner lining covering the remaining part of the orifice of the at least one casing half but leaving the remaining part of the recess uncovered of the at least one casing half, which part is adapted to receive the paint holding member of the paint tool.

### BRIEF DESCRIPTION OF THE DRAWINGS

In the following detailed portion of the present description, the invention will be explained in more detail with reference to the different aspects shown in the drawings, in which:
Fig. 1 is a perspective depiction of a casing for a paint tool, in particular for temporary sealed enclosure of a wet paint tool, such as a brush or roller for painting, in an open state enabling a user of the paint tool to put it in or take it out according to aspects of the present invention.
Fig. 2 is a perspective depiction of a casing for a paint tool, in particular for temporary sealed enclosure of a wet paint tool, such as a brush or roller for painting, in an open state illustrating the paint tool when put into the casing or about to be taken out of the casing according to aspects of the present invention.
Fig 3 is a side view of the casing in Fig. 1 as seen in a direction substantially perpendicular to the plane and/or longitudinal direction of the casing according to aspects of the present invention.
Fig 4 is a side view of the casing in Fig. 3 as seen in a direction substantially along the plane and/or longitudinal direction of the casing according to aspects of the present invention.
Fig. 5 is a sectional side view of the cross section of the casing in Fig. 3 for illustration of two different parts of the casing in its open state, wherein the left view A-A shows a part of the casing adapted for receiving at least a part of a paint applying member of the paint tool and the right view B-B shows a part of the casing adapted for receiving at least a part of a grip or holding member of the paint tool according to aspects of the present invention.
Fig 6 is a sectional side view of the cross section of the casing in Fig. 3 for illustration of the casing in its open state cut bias in relation to the views of Fig. 5 but showing substantially the same part of the casing as view B-B in Fig. 5 does when closed where the grip/holding member of the paint tool is placeable in more detail according to aspects of the present invention.
Fig 7 is a perspective view of a depiction of the casing shown in Figs. 1 to 6, but in a closed state in which the paint tool is to be put into and temporarily stored after a first use according to aspects of the present invention.
Fig 8 is a side view of the right end of the closed casing shown in Fig. 7 according to aspects of the present invention.
Fig 9 is a side view of the left end of the closed casing shown in Fig. 7 according to aspects of the present invention.
Fig 10 is a a sectional side view of the cross section E-E of the casing in Fig. 7 for illustration of one part of the casing in its closed state, wherein the view shown substantially corresponds to the right view B-B of Fig. 5 when closed showing the part of the casing where a grip or holding member of the paint tool is placeable according to aspects of the present invention.
Fig 11 is a sectional side view of the cross section F-F of the casing in Fig. 7 disclosing another part of the casing in its closed state, wherein the view shown substantially corresponds to the left view A-A of Fig. 5 when closed showing the casing without a paint applying member of the paint tool placed therein according to aspects of the present invention.
Fig 12 is a side view of the cross section E-E of the casing in Figs. 7 and 9 for illustration of a part of the casing in its closed state, wherein the view shown substantially corresponds to the right view B-B of Fig. 5 when closed but rotated counterclockwise showing the casing with a grip or holding member of the paint tool according to aspects of the present invention.
Fig 13 is a side view of the casing shown in Fig. 7, but in a closed state with the paint tool put into and temporarily stored after a first use in the casing according to aspects of the present invention.
Fig 14 is a sectional view of the cross section of the casing shown in Fig. 13 according to aspects of the present invention.

### DETAILED DESCRIPTION

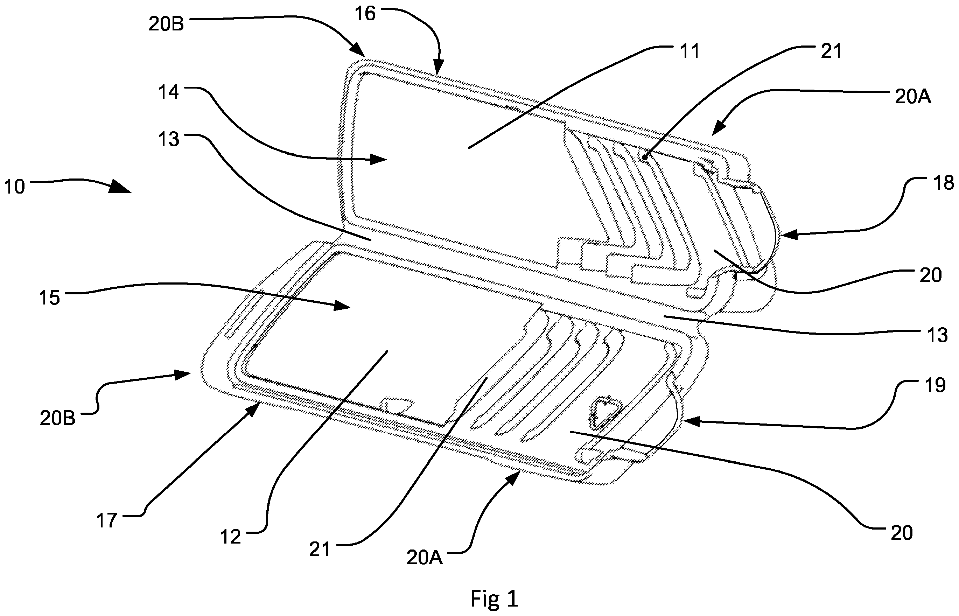

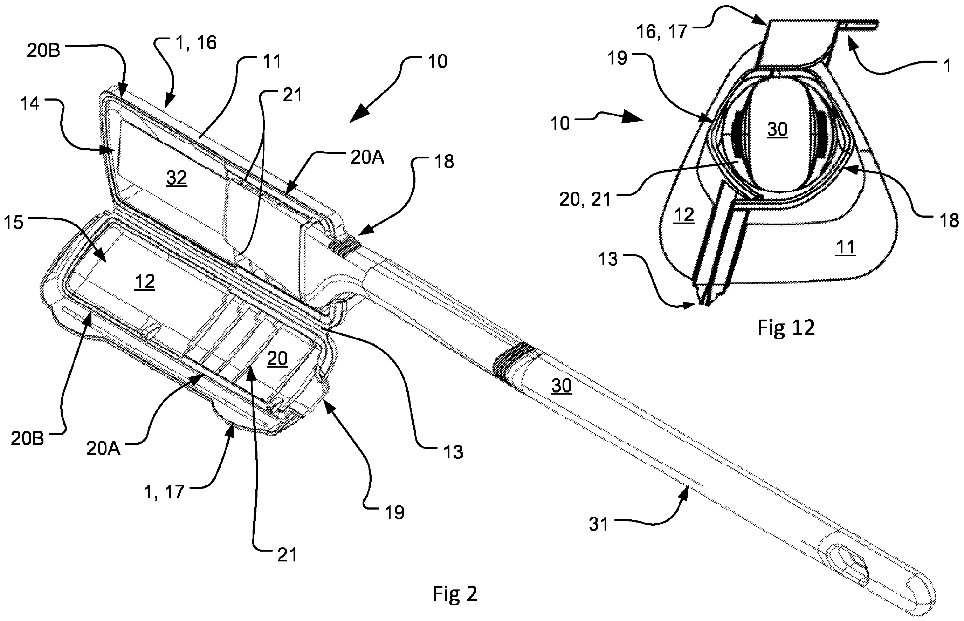

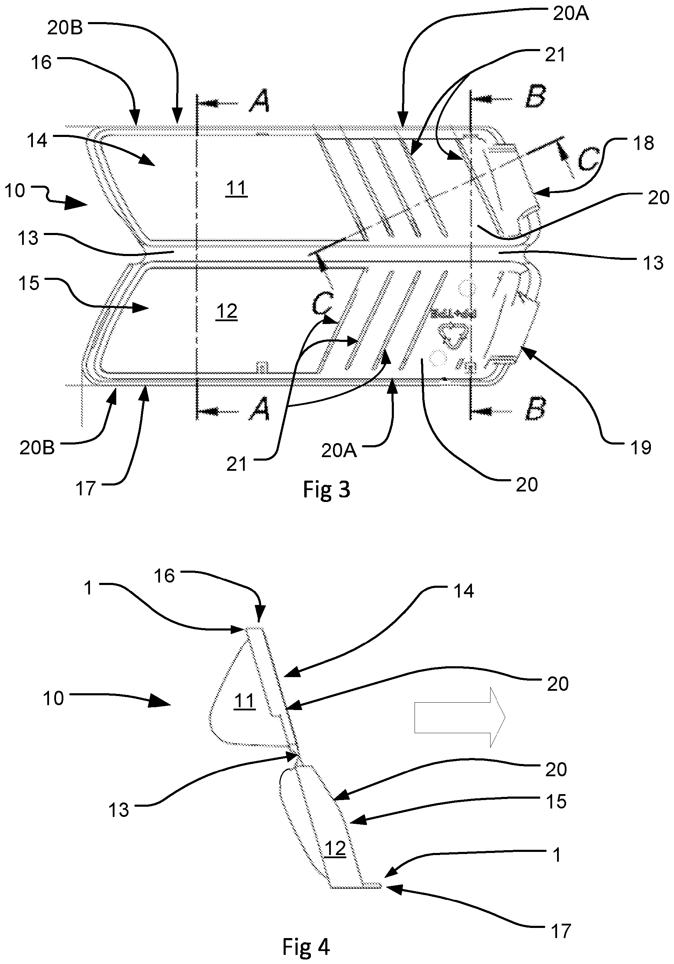

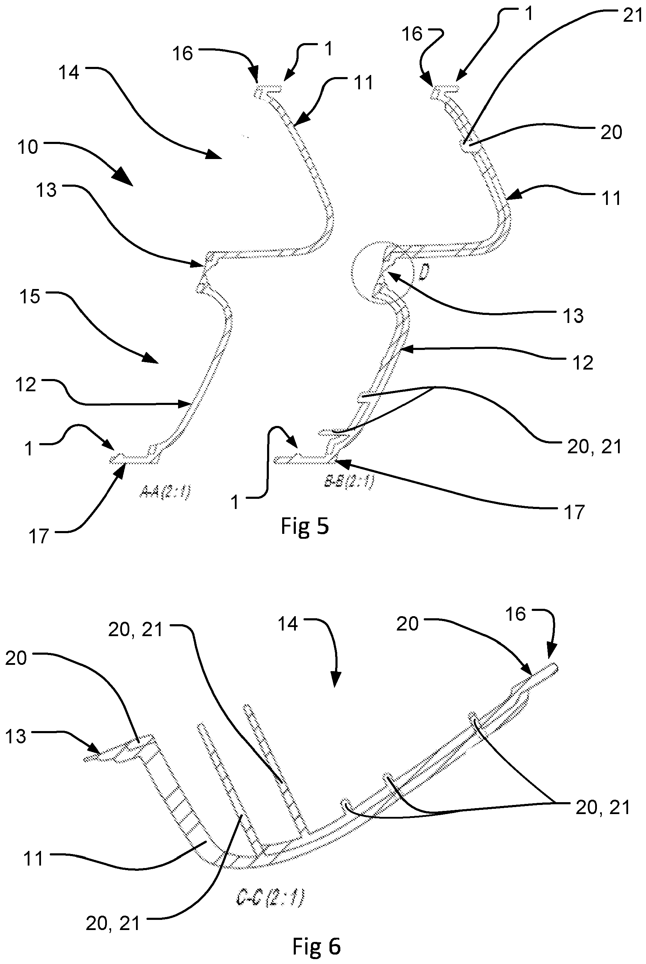

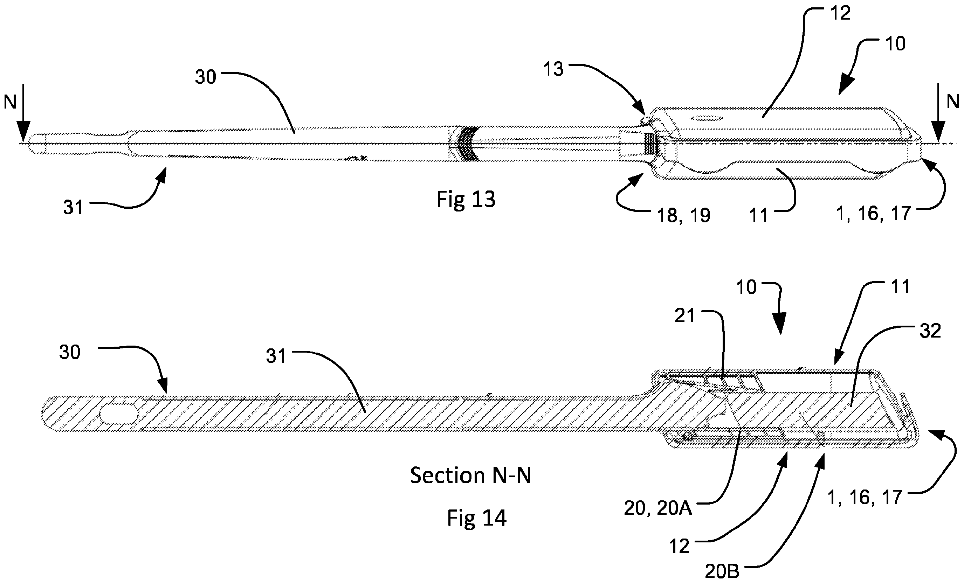

With reference to Figs. 1 to 14, a casing or enclosure for temporarily holding or temporary storing a wet/paint tainted paint tool is illustrated and generally designated by the reference number 10. The paint tool 30 (shown in Figs. 2, 12, 13, and 14) may be a paint brush or a paint applying roller. The casing 10 is airtight and made up by two casing halves 11, 12. The paint tool casing 10 is formed by either identical casing halves 11, 12, or semi-similar casing halves or at least partly different shaped casing halves as shown in the Figs. 1, 4, 5, and 8 to 11. The casing halves 11, 12 are connected by a living hinge 13. This foldable connection is arranged along a long side of each case half 11, 12 but could of course be arranged along a short side for each case half if applicable. The sealing 20 of the casing is a gasket moulded in one piece with at least one of the casing halves 11, 12 or both halves. The sealing/gasket 20 is moulded in another plastic material than the casing halves 11, 12.

The casing halves 11, 12 and the sealing/gasket 20 are made solid. The halves 11, 12 and the sealing 20 are made in plastic materials that are liquid proof but also air impermeable, at least to such an extent that liquid and/or air will not penetrate directly through these solid materials/structures 11, 12, 20 within any time period shorter than three days or 72 hours. The limitation of the airtightness of the casing 10 depends more on the actual mating of the opening surfaces of the case halves 11, 12 and the surfaces of the sealing 20 that touches/abuts physically directly against the envelope surface of the paint tool 30 when stored inside the casing 10 rather than the actual degree of liquid and air impenetrability of the material of which the casing 10, 11, 12, 20 is made of.

The casing halves 11, 12 are constructed from polypropylene or other suitable material that has sufficient resiliency and stiffness, which properties are optimized, to deform but do not deform too much when a paint tool 30 is put into and taken out of the casing 10 and when the casing is closed or opened. The material of the casing halves 11, 12 and/or the sealing 20 also has sufficient resistance to any paint and paint solvents. This material is preferably a solvent resistant polymer but other materials may be used. The same or equivalent criteria are required for the material of the sealing 20. The primary difference in material properties between the sealing 20 and the casing halves 11, 12 lies in the resilience or flexibility. The sealing 20 is to at least some extent more resilient or flexible or soft than the material of the casing halves 11, 12. As the sealing 20 is made in another plastic material than the casing halves 11, 12, an improved and optimised airtight casing 10 is accomplished. The plastic materials of the sealing 20 and the casing halves 11, 12 are a combination of any of the following plastic materials: polypropylene (PP); thermoplastic elastomer (TPE); polyamide (PA); polycarbonate (PC); acrylonitrile butadiene styrene (ABS); silicone; polycarbonate and acrylonitrile butadiene styrene (PC + ABS) and TPE, e.g. Bayblend^{®}; polypropylene and polypropylene (PP + PP), e.g. Softell^{®}; and/or polypropylene and silicone, e.g. in combination (PP + Silicone).

The living hinge 13 is accomplished by reduced thickness defining the hinge along a common joint or line of the two casing halves 11, 12, which joint extends along a long or short side of each casing half 11, 12 or along a part of both the long and/or short side of each casing half. The casing 10 is made of a sufficiently flexible material that allows the casing 10 to be opened for insertion and removal of the paint tool 30 eliminating the need of actual hinges as separate entities adhered or in any other way fixed to or on the pair of casing halves 11, 12.

Each casing half 11, 12 comprises or forms a receptacle or recess or indentation 14, 15 to receive at least a part of the paint tool 30. The casing 10 is metaphorically defined as a very small hard shell suitcase, i.e. the casing 10 is foldable into a closed state and an open state in a similar way as such a suitcase, the difference being the design of the hinge of the two casing or suitcase halves. In Figs. 1 and 2, the casing 10 is shown in an open state with an upper or first casing half 11 and a lower or second casing half 12. In the Figs. 1, 4, 5, and 8 to 12, the first casing half 11 has a larger or deeper recess 14 compared to the smaller or shallower recess 15 of the second casing half 12 but it could be the other way around or the casing halves could each have the same shape and dimensions. The sealing 20 comprises a first part or portion 20A, 21 shown to the right in Figs. 1 and 2 and a second part or portion 20B shown to the left in Figs. 1 and 2. The sealing 20 is configured with a fenestrated structure as shown in Fig 1. The first portion 20A of the sealing 20 is a continuous inner lining covering at least a part of the whole inner envelope surface of the recess 14, 15 and the surface of the orifice 16, 17 of at least one casing half 11, 12 or both casing halves of the casing 10 if each casing half comprises a sealing 20. The first portion 20A, 21 of the sealing is adapted to receive and seal against a head of the paint tool 30 and at least a part of a handle or grip or holding member 31 of the paint tool 30. The second part or portion 20B of sealing 20 of the continuous inner lining covers the remaining part of the surface of the orifice 16, 17 of at least one casing half 11, 12 or both casing halves of the casing 10 (if each casing half comprises a sealing 20), but do not cover the remaining part of the recess 14, 15 of the at least one casing half 11, 12 or both casing halves as this part is covered by the first portion 20A of the sealing 20. The second portion 20B of the sealing 20 is adapted to receive and seal against a part of the head of the paint tool 30 and a paint tainted or wet/paint holding member 32 of the paint tool 30 (see Figs. 2, 12, 13, and 14).

However, for clarity reasons, the two portions 20A and 20B of the sealing 20 is in fact not separate entities as the sealing 20 is moulded in one piece with the casing halves 11, 12. Hence, the sealing 20 on at least one casing half 11 or 12 or both casing halves is seamless. The two sealing portions 20A and 20B physically are the same entity but is defined in this way for a better understanding of the differing shape/structure of different portion of the sealing 20 as shown in the Figs.

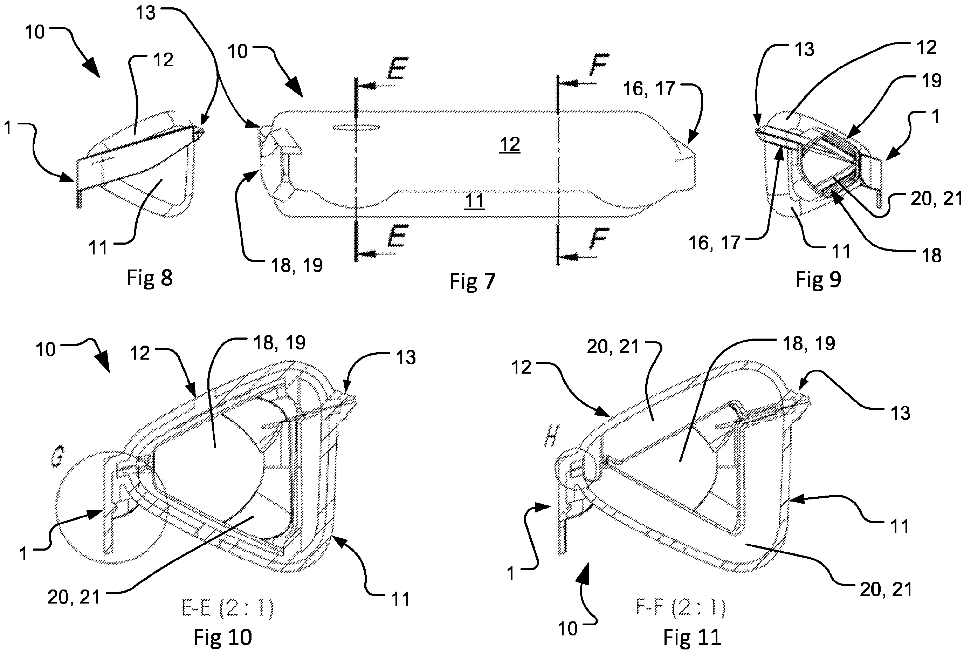

Each casing half 11, 12 comprises or forms an orifice, 16, 17 of the receptacle or recess or indentation or opening 14, 15. The orifices 16 and 17 of the casing half recesses 14, 15 are edges/surfaces that extend at least around a substantial part of the circumference of each opening of each recess 14, 15 of each casing half 11, 12. The orifices 16 and 17 of the casing half recesses 14, 15 are edges and/or surfaces extending in parallel and/or in the same plane as the circumference of each opening 14, 15 of each casing half 11, 12. The orifices 16 and 17 of the casing half recesses 14, 15 are edges and/or surfaces extending at least around the whole circumference of each opening of each recess 14, 15 of each casing half 11, 12 except for the part of the circumference along which the living hinge 13 is arranged. The orifices 16 and 17 of the casing half recesses 14, 15 are edges and/or surfaces that extend in parallel and/or in the same plane as the living hinge 13. The orifices 16 and 17 of the casing half recesses 14, 15 are edges and/or surfaces that may also be defined as comprising the living hinge 13 meaning that the edges/surfaces of the orifices 16, 17 circumscribe the full circumference of each recess opening 14, 15 of each casing half 11, 12 even though the hinge 13 is not in fact possible to separate as being an integrated/moulded part or the same as the casing 10. The orifices 16 and 17 of the casing half recesses 14, 15 are edges and/or surfaces that are adapted to abut or mate or engage in physical connection with each other when the casing 10 is closed (see Figs. 7 to 13).

Referring to Figs. 2, 4, 5, 5, and 8 to 14, the casing 10 also comprises a latch mechanism 1 to be able to be kept closed in a secure and airtight way and also be able to be easily opened to enable access of its interior. The latch mechanism 1 is an integrated/moulded part of the casing 10 in a similar way as the living hinge 13, i.e. these entities are in fact in one piece with the casing in the same way as the sealing 20 after moulding. Each casing half 11, 12 has interengaging structures arranged along at least a part of their recess openings 14, 15 that together make up the latch mechanism 1. The latch mechanism 1 and its interengaging structures fasten/holds the two case halves 11, 12 together after closing the casing 10 and are disengaged for opening the casing. The latch mechanism 1 is configured as a snap, latch, tab and complementary restraining slot or a releasable hook and loop fastener, such as Velcro^{®} fasteners.

The living hinge connection 13 makes the casing 10 a foldable one-piece enclosure able to be closed to enclose a paint holding member 32 of the paint tool 30, e.g. the brush head of a paint brush or the roller (not shown), not a whole grip or handle of these entities, in some aspects, only enclosing such a grip or handle partly depending on the shape/design of the paint tool 30. Hence, the casing 10 exposes the grip member 31 of the paint tool 30 when not in use. The grip or handle 31 of the paint tool 30 extends out of an end opening of the casing 10 formed by an end indentation or notch 18, 19 on at least one or each case half 11, 12 that mate when the casing is closed. The casing 10 comprises the at least one sealing 20 adapted to enclose the paint holding member 32 of the paint tool 30 and to cover mating surfaces of at least one or each orifice 16, 17 of the two casing halves 11, 12. This makes the casing 10 airtight to maintain the paint tainted paint holding member 32 of the paint tool 30 wet during storage after the casing is closed.

Paint tools 30 come in a variety of cross sections, e.g. round, elliptical, square, triangular, and rectangular. This disclosure is not meant to limit the invention to any particular shape or size or type of paint tool, i.e. the paint tool casing 10 is adaptable to be able to enclose any desired cross section of such a paint tool and any type of paint tool.

The orifice 16, 17 of each casing half 11, 12 is configured to receive and surround at least a part of the paint tool 30. The sealing 20 is moulded in one piece with the orifice 16, 17 of the receptacle 14, 15 of at least one of the casing halves 11, 12 or each of the casing halves.

The casing 10 comprises the two hingedly connected halves 11, 12 making the casing a foldable one-piece airproof enclosure able to be closed to enclose a paint tainted/wet paint holding member 32 of the paint tool 30 while exposing the grip member 31 of the paint tool when not in use. The casing 10 is able to be opened to enable access to the paint tool 30 for use. The casing 10 comprises at least one sealing 20 on one casing half 11 or 12 or two sealings 20, i.e. one sealing on each casing half. The sealing 20 is adapted to enclose the paint holding member 32 of the paint tool 30 and to cover the mating surface of at least one orifice 16, 17 of at least one casing half 11, 12 or each orifice 16, 17 of each casing half, i.e. to cover mating surfaces of two casing halves. The sealing 20 is moulded in one piece with at least one or each of the casing halves 11, 12. Moreover, each of the casing halves 11, 12 and its recess 14, 15 is configured to receive and surround at least a part of the envelope surface of the paint tool 30. The sealing 20 is moulded in one piece with the recess 14, 15 of at least one casing half or both casing halves 11, 12, e.g. moulded in one piece with the recess of each of the casing halves. The sealing 20 is moulded in one piece with the orifice 16, 17 of the recess 14, 15 of at least one of the casing halves or both casing halves 11, 12, i.e. each of the casing halves. This makes the inventive casing 10 airtight to maintain the paint tool 30 wet during storage after the casing is closed for at least 72 hours. This means that air does not leak into the inventive casing 10 to such an extent that remaining paint on the paint holding part 32 of the paint tool 30 will harden enough to make the paint tool difficult to use or even worthless for further painting after the casing is closed and the paint tool 30 stored therein for at least 72 hours.

The sealing 20 is in some aspects of the invention at least partly configured as a labyrinth seal. In further aspects, the sealing 20 is accomplished by forming at least one lamella 21 on the inside of at least one casing half 11, 12, preferably at least two lamellas or more preferred at least three lamellas. The at least one lamella 21 of the sealing 20 is formed on the inside of one casing half 11 or 12 or both casing halves, i.e. each casing half. The at least one sealing lamella 21 protrudes away from one casing half 11, 12 or both, if formed on each casing half, inwards when the casing 10 is closed as shown in Figs. 7 to 14. In Figs. 1 and 2, the lamella/-s 21 extend/-s essentially upwards or outwards as the casing 10 is not closed, but will point more and more inwards as the casing halves 11, 12 are moved closer and closer towards each other as the lamella/-s 21 follow the pivot movement of the halves 11, 12 when closing the casing 10. The aim of the lamella/-s 21 is/are to fit tightly around at least a part of the paint tool 30 when the casing 10 is closed, i.e. surrounding the associated paint tainted part of the paint tool in an airtight way when the casing 10 is closed for at least 72 hours. Hence, at least one or more lamellas 21 on one casing half 11 or 12 fits tightly around at least a part of the paint tool 30 and at least one or more lamellas on the other casing half 12 or 11 fits tightly around at least the remaining of substantially the same part of the paint tool 30 when the casing 10 is closed if both, i.e. each casing half 11, 12 has a sealing 20 with lamella/-s 21. This makes the closed casing 10 air-tight for at least 72 hours. The sealing 20 in another aspect of the invention is an integrally moulded inner lining of a part of at least one casing half or both casing halves 11, 12, i.e. each casing half, whereby a seamless and airtight joining of the sealing and at least one casing half or both casing halves is achieved.

At least one casing half 11 or 12 comprises the indentation/notch 18 or 19 at one end as shown in Fig. 1, 6, and 8 to 10. This indentation 18, 19 forms a casing end opening when the casing 10 is closed. If each casing half 11, 12 (as shown in Fig. 1) comprises an indentation 18, 19, they together form an end opening of the closed casing 10, i.e. as being complementary. Hence, the indentation 18 on the first casing half 11 mates with the other indentation 19 on the other, i.e. second case half 12 to form the then subscribed end opening when the casing 10 is finally closed. The handle/grip 31 of the paint tool 30 thereafter extends out through the above end opening (see Figs. 2, 12, and 13 to 14).

To optimise the weight and sealing effect and to save material of the inventive casing 10, the sealing 20 is configured as the fenestrated structure/entity where its first portion 20A is the continuous inner lining covering at least a part of the whole inner envelope surface of the recess 14, 15 and the orifice 16, 17 of at least one casing half or both casing halves 11, 12. The second part 20B of the sealing 20 is the continuous inner lining covering the remaining part of the orifice 16, 17 of the at least one casing half or both casing halves 11, 12 but leaving the remaining part of the recess 14, 15 of the at least one casing half or both casing halves 11, 12 uncovered/exposed, this is clearly seen in Figs. 1 and 2 when the casing 10 is open.

The at least one lamella 21 on both casing halves 11, 12 is configured to fit tightly around a part of the circumference of the grip/holding member 31 of the paint tool 30 and interact with the at least one lamella on the other casing half that is configured to fit tightly around at least a remaining part of the circumference of the handle/grip of the paint tool when the casing 10 is closed, such that the at least two lamellas 21 together enclose/circumvent essentially the same whole circumference of the paint tainted member 32 and as shown in Figs. 2 and 14, enclose/circumvent at least a part of the transcending part of the paint tool, i.e. the brush filament holding part with shoulders extending from the paint tainted member 32 towards the handle/grip 31 of the paint tool 30.

### NOMENCLATURE

1 Latch mechanism
10 Casing/Enclosure for temporarily holding a wet paint tool
11 First casing half
12 Second casing half
13 Living hinge of casing for foldable connection of casing halves
14 Receptacle/Recess/lndentation/Opening of the first casing half
15 Receptacle/Recess/Indentation/Opening of the second casing half
16 Orifice of the opening/receptacle/recess of the first casing half
17 Orifice of the opening/receptacle/recess of the second casing half
18 End indentation/notch of the first casing half
19 End indentation/notch of the second casing half
20 Sealing/Gasket of casing
20A First portion/part of the sealing/gasket
20B Second portion/part of the sealing/gasket
21 Lamella/Partition/Wall of the sealing
30 Paint tool
31 Handle/Grip/Holding member of the paint tool
32 Paint holding/tainted or wet part of the paint tool

## Claims

1. Casing (10) for temporarily storing a wet paint tool (30), the casing comprising two halves (11, 12) connected by a living hinge (13), each casing half (11, 12) comprising a mating surface adapted to interact with a mating surface of the other casing half, wherein the casing is adapted to be closed to enclose a paint holding member (32) of the paint tool while exposing a part of a grip member (31) of the paint tool and to be opened to enable access to the paint tool, and at least one sealing (20) adapted to enclose at least a part of the paint holding member of the paint tool, and wherein the at least one sealing (20) covers at least a part of the mating surface of at least one casing half, and the sealing (20) is a gasket moulded in one piece with at least one of the casing halves (11, 12) and moulded in a plastic material that is different from the material of the casing halves (11, 12), and wherein each of the casing halves (11, 12) comprises a recess (14, 15) configured to receive and surround at least a part of the paint tool (30), whereby the sealing (20) is moulded in one piece with the recess (14, 15) of at least one of the casing halves (11, 12) .

2. Casing (10) according to claim 1, wherein the sealing (20) is moulded in one piece with each of the casing halves (11, 12).

3. Casing (10) according to claim 1 or 2, wherein the sealing (20) is moulded in one piece with the recess (14, 15) of each of the casing halves (11, 12).

4. Casing (10) according to claim 1, 2 or 3, wherein the recess (14, 15) of each casing half (11, 12) comprises an orifice (16, 17) configured to receive and surround at least a part of the paint tool (30), whereby the sealing (20) is moulded in one piece with the orifice (16, 17) of said recess (14, 15) of at least one of the casing halves (11, 12).

5. Casing (10) according to claim 4, wherein the sealing (20) is moulded in one piece with the orifice (16, 17) of the recess (14, 15) of each of the casing halves (11, 12).

6. Casing (10) according to any preceding claim, wherein the sealing (20) is at least partly configured as a labyrinth seal.

7. Casing (10) according to any preceding claim, wherein the sealing (20) is accomplished by at least one lamella (21) formed on the inside of at least one casing half (11, 12).

8. Casing (10) according to claim 7, wherein the at least one lamella (21) is formed on the inside of each casing half (11, 12).

9. Casing (10) according to claim 7 or 8, wherein the at least one lamella (21) protrudes away from one casing half (11, 12) inwards when the casing (10) is closed.

10. Casing (10) according to claim 7, 8 or 9, wherein the at least one lamella (21) is configured to fit tightly around at least a part of the paint tool (30) when the casing (10) is closed.

11. Casing (10) according to claim 7, 8, 9 or 10, wherein the at least one lamella (21) on one casing half (11, 12) is configured to fit tightly around at least a part of the paint tool (30) and at least one lamella on the other casing half is configured to fit tightly around at least the remaining of substantially the same part of the paint tool when the casing (10) is closed.

12. Casing (10) according to any preceding claim, wherein the sealing (20) is configured as an integrally moulded inner lining of a part of at least one casing half (11, 12).

13. Casing (10) according to any preceding claim, wherein the sealing (20) is configured as an integrally moulded inner lining of a part of each of the casing halves (11, 12).

14. Casing (10) according to any preceding claim, wherein one case half (11) comprises an/a indentation/notch (18) at one end configured to form an end opening of the casing (10) together with an/a complementary indentation/notch (19) of the other case half (12) when the case is closed through which end opening the grip member (31) of the paint tool (30) at least partly extends out of.

15. Casing (10) according to any preceding claim, wherein the sealing (20) is made in another plastic material than the casing halves (11, 12), which plastic materials of the sealing and the casing halves are a combination of any of the following plastic materials, such as polypropylene; thermoplastic elastomer; polyamide; polycarbonate; acrylonitrile butadiene styrene; silicone; polycarbonate and acrylonitrile butadiene styrene and thermoplastic elastomer; and/or polypropylene and silicone.

16. Casing (10) according to claim 4 or 5, wherein the sealing (20) is configured as a fenestrated structure comprising a first part (20A) of a continuous inner lining covering at least a part of the whole inner surface of the recess (14, 15) and the orifice (16, 17) of at least one casing half (11, 12), which part is adapted to receive at least a part of the grip member (31) of the paint tool (30).

17. Casing (10) according to claim 16, wherein the sealing (20) comprises a second part (20B) of the continuous inner lining covering the remaining part of the orifice (16, 17) of the at least one casing half (11, 12) but leaving the remaining part of the recess (14, 15) uncovered of the at least one casing half (11, 12), which part is adapted to receive the paint holding member (32) of the paint tool (30).

## Patentansprüche

1. Gehäuse (10) zur vorübergehenden Aufbewahrung eines nassen Malerwerkzeugs (30), wobei das Gehäuse zwei Hälften (11, 12) umfasst, die durch ein bewegliches Scharnier (13) verbunden sind, wobei jede Gehäusehälfte (11, 12) eine Passfläche umfasst, die dazu ausgebildet ist, mit einer Passfläche der anderen Gehäusehälfte zusammenzuwirken, wobei das Gehäuse so ausgebildet ist, dass es geschlossen werden kann, um ein Lackhalteelement (32) des Malerwerkzeugs zu umschließen, während ein Teil eines Griffstücks (31) des Malerwerkzeugs freigelegt wird, und geöffnet werden kann, um einen Zugang zu dem Malerwerkzeug zu ermöglichen, und mindestens eine Dichtung (20), die dazu ausgebildet ist, mindestens einen Teil des Lackhalteelements des Malerwerkzeugs zu umschließen, und wobei die mindestens eine Dichtung (20) mindestens einen Teil der Passfläche von mindestens einer Gehäusehälfte bedeckt und die Dichtung (20) eine Dichtung ist, die in einem Stück mit mindestens einer der Gehäusehälften (11, 12) gegossen und aus einem Kunststoffmaterial gebildet ist, das von dem Material der Gehäusehälften (11, 12) verschieden ist, und wobei jede der Gehäusehälften (11, 12) eine Aussparung (14, 15) umfasst, die dazu ausgelegt ist, einen Teil des Malerwerkzeugs (30) aufzunehmen und zu umgeben, wodurch die Dichtung (20) in einem Stück mit der Aussparung (14, 15) von zumindest einer der Gehäusehälften (11, 12) gegossen ist.

2. Gehäuse (10) gemäß Anspruch 1, wobei die Dichtung (20) in einem Stück mit jeder der Gehäusehälften (11, 12) gegossen ist.

3. Gehäuse (10) gemäß Anspruch 1 oder 2, wobei die Dichtung (20) in einem Stück mit der Aussparung (14, 15) jeder der Gehäusehälften (11, 12) gegossen ist.

4. Gehäuse (10) gemäß Anspruch 1, 2 oder 3, wobei die Aussparung (14, 15) jeder Gehäusehälfte (11, 12) eine Öffnung (16, 17) umfasst, die dazu ausgelegt ist, mindestens einen Teil des Malerwerkzeugs (30) aufzunehmen und zu umgeben, wodurch die Dichtung (20) in einem Stück mit der Öffnung (16, 17) der Aussparung (14, 15) von mindestens einer der Gehäusehälften (11, 12) gegossen ist.

5. Gehäuse (10) gemäß Anspruch 4, wobei die Dichtung (20) in einem Stück mit der Öffnung (16, 17) der Aussparung (14, 15) jeder der Gehäusehälften (11, 12) gegossen ist.

6. Gehäuse (10) gemäß einem der vorhergehenden Ansprüche, wobei die Dichtung (20) mindestens teilweise als Labyrinthdichtung ausgelegt ist.

7. Gehäuse (10) gemäß einem der vorhergehenden Ansprüche, wobei die Dichtung (20) durch mindestens eine an der Innenseite mindestens einer Gehäusehälfte (11, 12) ausgebildete Lamelle (21) erreicht wird.

8. Gehäuse (10) gemäß Anspruch 7, wobei die mindestens eine Lamelle (21) an der Innenseite jeder Gehäusehälfte (11, 12) ausgebildet ist.

9. Gehäuse (10) gemäß Anspruch 7 oder 8, wobei die mindestens eine Lamelle (21) von einer Gehäusehälfte (11, 12) nach innen wegsteht, wenn das Gehäuse (10) geschlossen ist.

10. Gehäuse (10) gemäß Anspruch 7, 8 oder 9, wobei die mindestens eine Lamelle (21) so ausgelegt ist, dass sie eng um mindestens einen Teil des Malerwerkzeugs (30) passt, wenn das Gehäuse (10) geschlossen ist.

11. Gehäuse (10) gemäß Anspruch 7, 8, 9 oder 10, wobei die mindestens eine Lamelle (21) an einer Gehäusehälfte (11, 12) so ausgelegt ist, dass sie eng um mindestens einen Teil des Malerwerkzeugs (30) passt, und mindestens eine Lamelle an der anderen Gehäusehälfte so ausgelegt ist, dass sie eng um mindestens den restlichen, im Wesentlichen gleichen Teil des Malerwerkzeugs passt, wenn das Gehäuse (10) geschlossen ist.

12. Gehäuse (10) gemäß einem der vorhergehenden Ansprüche, wobei die Dichtung (20) als einstückig gegossene Innenauskleidung eines Teils mindestens einer Gehäusehälfte (11, 12) ausgelegt ist.

13. Gehäuse (10) gemäß einem der vorhergehenden Ansprüche, wobei die Dichtung (20) als einstückig gegossene Innenauskleidung eines Teils jeder der Gehäusehälften (11, 12) ausgelegt ist.

14. Gehäuse (10) gemäß einem der vorhergehenden Ansprüche, wobei eine Gehäusehälfte (11) an einem Ende eine Vertiefung/Kerbe (18) umfasst, die so ausgelegt ist, dass sie zusammen mit einer komplementären Vertiefung/Kerbe (19) der anderen Gehäusehälfte (12) eine Endöffnung des Gehäuses (10) bildet, wenn das Gehäuse geschlossen ist, wobei das Griffstück (31) des Malerwerkzeugs (30) mindestens teilweise aus dieser Endöffnung herausragt.

15. Gehäuse (10) gemäß einem der vorhergehenden Ansprüche, wobei die Dichtung (20) aus einem anderen Kunststoffmaterial als die Gehäusehälften (11, 12) besteht, wobei die Kunststoffmaterialien der Dichtung und der Gehäusehälften eine Kombination aus einem der folgenden Kunststoffmaterialien sind: Polypropylen; thermoplastisches Elastomer; Polyamid; Polycarbonat; Acrylnitril-Butadien-Styrol; Silikon; Polycarbonat und Acrylnitril-Butadien-Styrol und thermoplastisches Elastomer; und/oder Polypropylen und Silikon.

16. Gehäuse (10) gemäß Anspruch 4 oder 5, **dadurch gekennzeichnet, dass** die Dichtung (20) als gefensterte Struktur ausgelegt ist, die einen ersten Teil (20A) einer durchgehenden Innenauskleidung umfasst, die mindestens einen Teil der gesamten Innenfläche der Aussparung (14, 15) und der Öffnung (16, 17) mindestens einer Gehäusehälfte (11, 12) bedeckt, wobei dieser Teil dazu ausgebildet ist, mindestens einen Teil des Griffstücks (31) des Malerwerkzeugs (30) aufzunehmen.

17. Gehäuse (10) gemäß Anspruch 16, wobei die Dichtung (20) einen zweiten Teil (20B) der durchgehenden Innenauskleidung umfasst, der den restlichen Teil der Öffnung (16, 17) der mindestens einen Gehäusehälfte (11, 12) bedeckt, aber den restlichen Teil der Aussparung (14, 15) der mindestens einen Gehäusehälfte (11, 12) unbedeckt lässt, wobei dieser Teil dazu ausgebildet ist, das Lackhalteelement (32) des Malerwerkzeugs (30) aufzunehmen.

## Revendications

1. Boîtier (10) pour le rangement temporaire d'un outil de peinture humide (30), le boîtier comprenant deux moitiés (11, 12) raccordées par une charnière souple (13), chaque moitié de boîtier (11, 12) comprenant une surface d'accouplement propre à interagir avec une surface d'accouplement de l'autre moitié de boîtier, le boîtier étant propre à être fermé pour envelopper un élément de support de peinture (32) de l'outil de peinture tout en exposant une partie d'un élément de préhension (31) de l'outil de peinture et à être ouvert pour permettre d'accéder à l'outil de peinture, et au moins un dispositif d'étanchéité (20) propre à envelopper au moins une partie de l'élément de support de peinture de l'outil de peinture, et l'au moins un dispositif d'étanchéité (20) couvrant au moins une partie de la surface d'accouplement d'au moins une moitié de boîtier, et le dispositif d'étanchéité (20) étant un joint d'étanchéité moulé d'un seul tenant avec au moins une des moitiés de boîtier (11, 12) et moulé en une matière plastique qui est différente du matériau des moitiés de boîtier (11, 12), et chacune des moitiés de boîtier (11, 12) comprenant un renfoncement (14, 15) conçu pour recevoir et entourer au moins une partie de l'outil de peinture (30), le dispositif d'étanchéité (20) étant moulé d'un seul tenant avec le renfoncement (14, 15) d'au moins une des moitiés de boîtier (11, 12).

2. Boîtier (10) selon la revendication 1, dans lequel le dispositif d'étanchéité (20) est moulé d'un seul tenant avec chacune des moitiés de boîtier (11, 12).

3. Boîtier (10) selon la revendication 1 ou 2, dans lequel le dispositif d'étanchéité (20) est moulé d'un seul tenant avec le renfoncement (14, 15) de chacune des moitiés de boîtier (11, 12).

4. Boîtier (10) selon la revendication 1, 2 ou 3, dans lequel le renfoncement (14, 15) de chaque moitié de boîtier (11, 12) comprend un orifice (16, 17) conçu pour recevoir et entourer au moins une partie de l'outil de peinture (30), le dispositif d'étanchéité (20) étant moulé d'un seul tenant avec l'orifice (16, 17) dudit renfoncement (14, 15) d'au moins une des moitiés de boîtier (11, 12).

5. Boîtier (10) selon la revendication 4, dans lequel le dispositif d'étanchéité (20) est moulé d'un seul tenant avec l'orifice (16, 17) du renfoncement (14, 15) de chacune des moitiés de boîtier (11, 12).

6. Boîtier (10) selon l'une quelconque des revendications précédentes, dans lequel le dispositif d'étanchéité (20) est au moins partiellement conçu comme un joint à labyrinthe.

7. Boîtier (10) selon l'une quelconque des revendications précédentes, dans lequel le dispositif d'étanchéité (20) est constitué par au moins une lamelle (21) formée sur l'intérieur d'au moins une moitié de boîtier (11, 12).

8. Boîtier (10) selon la revendication 7, dans lequel l'au moins une lamelle (21) est formée sur l'intérieur de chaque moitié de boîtier (11, 12).

9. Boîtier (10) selon la revendication 7 ou 8, dans lequel l'au moins une lamelle (21) fait saillie à partir d'une moitié de boîtier (11, 12) vers l'intérieur lorsque le boîtier (10) est fermé.

10. Boîtier (10) selon la revendication 7, 8 ou 9, dans lequel l'au moins une lamelle (21) est conçue pour s'adapter de manière serrée autour d'au moins une partie de l'outil de peinture (30) lorsque le boîtier (10) est fermé.

11. Boîtier (10) selon la revendication 7, 8, 9 ou 10, dans lequel l'au moins une lamelle (21) sur une moitié de boîtier (11, 12) est conçue pour s'adapter de manière serrée autour d'au moins une partie de l'outil de peinture (30) et au moins une lamelle sur l'autre moitié de boîtier est conçue pour s'adapter de manière serrée autour au moins de la portion restante d'essentiellement la même partie de l'outil de peinture lorsque le boîtier (10) est fermé.

12. Boîtier (10) selon l'une quelconque des revendications précédentes, dans lequel le dispositif d'étanchéité (20) est conçu comme un revêtement intérieur moulé comme partie intégrante d'une partie d'au moins une moitié de boîtier (11, 12).

13. Boîtier (10) selon l'une quelconque des revendications précédentes, dans lequel le dispositif d'étanchéité (20) est conçu comme un revêtement intérieur moulé comme partie intégrante d'une partie de chacune des moitiés de boîtier (11, 12).

14. Boîtier (10) selon l'une quelconque des revendications précédentes, dans lequel une moitié de boîtier (11) comprend un cran/une échancrure (18) à une extrémité conçu(e) pour former une ouverture d'extrémité du boîtier (10) conjointement avec un cran/une échancrure complémentaire (19) de l'autre moitié de boîtier (12) lorsque le boîtier est fermé, l'élément de préhension (31) de l'outil de peinture (30) s'étendant au moins partiellement à travers ladite ouverture d'extrémité.

15. Boîtier (10) selon l'une quelconque des revendications précédentes, dans lequel le dispositif d'étanchéité (20) est fait d'une autre matière plastique que celle des moitiés de boîtier (11, 12), lesdites matières plastiques du dispositif d'étanchéité et des moitiés de boîtier étant une combinaison de matériaux quelconques parmi les matières plastiques suivantes : polypropylène ; élastomère thermoplastique ; polyamide ; polycarbonate ; acrylonitrile butadiène styrène ; silicone ; polycarbonate et acrylonitrile butadiène styrène et élastomère thermoplastique ; et/ou polypropylène et silicone.

16. Boîtier (10) selon la revendication 4 ou 5, dans lequel le dispositif d'étanchéité (20) est conçu comme une structure fenêtrée comprenant une première partie (20A) d'un revêtement intérieur continu couvrant au moins une partie de la surface intérieure entière du renfoncement (14, 15) et de l'orifice (16, 17) d'au moins une moitié de boîtier (11, 12), ladite partie étant propre à recevoir au moins une partie de l'élément de préhension (31) de l'outil de peinture (30).

17. Boîtier (10) selon la revendication 16, dans lequel le dispositif d'étanchéité (20) comprend une seconde partie (20B) du revêtement intérieur continu couvrant la partie restante de l'orifice (16, 17) de l'au moins une moitié de boîtier (11, 12) mais laissant la partie restante du renfoncement (14, 15) de l'au moins une moitié de boîtier (11, 12) exposée, ladite partie étant propre à recevoir l'élément de support de peinture (32) de l'outil de peinture (30).
